# EUROPEAN PATENT SPECIFICATION

(11) **EP 3 628 395 B1**
(45) Date of publication and mention of the grant of the patent: **01.06.2022**
(21) Application number: 18856051.0
(22) Date of filing: 10.08.2018
(51) Int. Cl.: B01D 53/86, B01D 53/90, B01D 53/88

(54) **DINITRIFCATION APPARATUS FOR COAL FIRED BOILER**
DENITRIFIKATIONSVORRICHTUNG FÜR KOHLEBEFEUERTEN KESSEL
APPAREIL DE DÉNITRIFICATION POUR CHAUDIÈRE À CHARBON

(30) Priority: 15.09.2017 JP 2017177662
(43) Date of publication of application: 01.04.2020
(73) Proprietor: Mitsubishi Power, Ltd., Yokohama 220-8401 (JP)
(72) Inventor: MIYANISHI, Hideo, Yokohama-shi Kanagawa 220-8401 (JP); ODA, Manabu, Tokyo 108-8215 (JP); TSUTSUMI, Ryuji, Yokohama-shi Kanagawa 220-8401 (JP); TODAKA, Shimpei, Tokyo 108-8215 (JP)
(74) Representative: Henkel & Partner mbB
(86) International application number: PCT/JP2018/030008
(87) International publication number: WO 2019/054108

(56) References cited:
- WO-A1-2012/060378
- JP-A- H0 975 664
- JP-A- H1 057 770
- JP-A- H1 057 770
- JP-A- S5 364 103
- JP-A- H07 213 857
- JP-A- H07 213 857
- JP-A- 2005 140 370

## Description

### [Technical Field]

The present invention relates to a denitration apparatus for a coal fired boiler.

### [Background Art]

In a coal fired boiler, a denitration apparatus in which ammonia is used as a reducing agent is heavily used. In such a denitration apparatus for a coal fired boiler, when variation in flow velocity distribution of exhaust gas inside a duct in positions where ammonia injection nozzles are installed is present due to bending of the duct, since it is likely that high efficiency of denitration performance is hindered from being achieved, it is desirable that the ammonia is uniformly diffused.

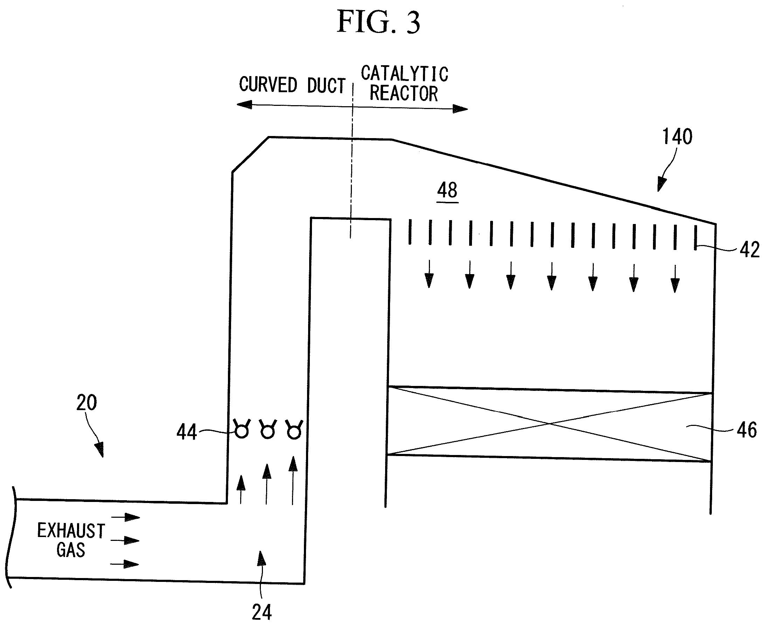

Therefore, as shown in Fig. 3, in order to ensure diffusion distances of ammonia gas jetted from ammonia injection nozzles 44, a method in which a vertical upflow duct behind positions where the ammonia injection nozzles 44 are installed is designed to be long has been adopted. In addition, by providing a rectifying device 42 in an inlet of a catalytic reactor 140, exhaust gas downflows flowing into a catalyst layer 46 are rectified, thereby devising achievement of the high efficiency of the denitration performance.

On the other hand, in JP H09-24246 A, there is disclosed a method in which orientations and angles of ammonia injection nozzles are changed depending on exhaust gas flow channel shapes and ammonia jetted from the ammonia injection nozzles is uniformly distributed in exhaust gas.

JP H07 213857 A discloses a denitration apparatus for a coal-fired boiler in which a catalyst layer is disposed in a separate portion of a flow channel that is spaced apart and is more expanded than an upstream portion of the flow channel where the injection nozzles are disposed. An expansion section of the flow channel is formed immediately upstream of the catalyst layer and downstream of the injection nozzles.

JP H10 57770 A discloses a denitration apparatus for flue gas of a coal-fired boiler in which a denitrification catalyst is arranged between an expanding inlet duct and an outlet duct, and a waste gas flowing into the inlet duct is heated by a heat exchanger. A flow straightening plate is provided on the upstream side of the heat exchanger, the heat exchanger is furnished between the inlet duct and the catalyst and opposed to the catalyst, and the lower end face of the heat exchanger is connected to the upper end face of a communication duct containing the catalyst. A reducing agent injection pipe with nozzles is arranged either in the inlet duct where the same is narrower than the flow channel where the catalyst is arranged, below the heat exchanger and thus separated from the flow straightening plate, or within the heat exchanger.

### [Summary of Invention]

### [Technical Problem]

Although in the denitration apparatus for a coal fired boiler, it is desirable that the ammonia is uniformly diffused, as described with reference to Fig. 3, in order to ensure diffusion distances of ammonia gas jetted from the ammonia injection nozzles, it is required to design the vertical upflow duct to be long.

In addition, when a denitration apparatus is added to the existing boiler, it is required to change a layout of the existing duct to install ammonia injection nozzles, and each time when the layout thereof is changed, designing is required, and a designing period and costs are incurred.

On the other hand, as in JP H09-24246 A, when structures of the ammonia injection nozzles themselves are changed, problems such as complication of the structures and difficulties in assembling thereof are likely to arise.

In view of above-described situations, an object of one aspect of the present invention is to provide a denitration apparatus for a coal fired boiler, in which velocity distribution of exhaust gas in positions where ammonia injection nozzles are installed is made uniform and the exhaust gas whose flows have been rectified is caused to pass therethrough, thereby uniformly diffusing jetted ammonia gas without elongating a duct.

### [Solution to Problem]

In order to solve the above-mentioned problems, a denitration apparatus for a coal fired boiler according to the invention has the features of claim 1.

In the denitration apparatus for a coal fired boiler according to the present invention, the ammonia injection nozzles are installed upstream of the catalyst layer and in the inlet of the portion of the catalytic reactor whose flow channel cross-sectional area is made substantially constant. Bias of flow of the exhaust gas generated in the curved duct which is connected to the upstream of the catalytic reactor are rectified by flow channel resistance of the ammonia injection nozzles themselves. Thus, variation in a concentration of the ammonia of the ammonia gas jetted from the ammonia injection nozzles due to the bias of flow is suppressed and the ammonia gas can be stably diffused, and moreover, the exhaust gas in a rectified state reaches the catalyst layer. In the conventional denitration apparatus in which the ammonia injection nozzles are provided in the curved duct where the bias of flow is generated, it is required to ensure diffusion distances of the ammonia gas inside the duct. However, in the denitration apparatus for a coal fired boiler according to the present aspect, by providing the ammonia injection nozzles in the catalytic reactor, the duct which is conventionally extended can be shortened. Accordingly, the denitration apparatus can be downsized. In addition, when the denitration apparatus is added to the existing boiler, it is not required to change a layout of the existing duct each time of the addition, thereby allowing a designing period to be shortened and costs to be reduced.

In addition, since a flow channel cross-sectional area of the catalytic reactor (the inlet of the catalytic reactor) where the ammonia injection nozzles are installed is approximately three times as large as a flow channel cross-sectional area of the curved duct, and the catalytic reactor is a region where a flow velocity of the exhaust gas is as low as one third of a flow velocity thereof in the curved duct, a pressure loss can be reduced and erosion of the ammonia injection nozzles can be reduced.

In the denitration apparatus for a coal fired boiler, the rectifying device and the ammonia injection nozzles are installed upstream of the catalyst layer and on an inlet portion of the section of the catalytic reactor whose flow channel cross-sectional area is substantially constant. In addition, the ammonia injection nozzles are set immediately downstream of the rectifying device in such a way as to be continuous with the rectifying device. Thus, bias of flow of the exhaust gas generated in the curved duct which is connected to the upstream of the catalytic reactor are rectified by the rectifying device which is installed upstream of the ammonia injection nozzles. In addition, the rectifying device and the ammonia injection nozzles are continuously installed, and between the rectifying device and the ammonia injection nozzles, other components are not installed. Therefore, the exhaust gas passing through the ammonia injection nozzles becomes rectified. Thus, variation in a concentration of the ammonia of the ammonia gas jetted from the ammonia injection nozzles due to the bias of flow is suppressed and the ammonia gas can be stably diffused. In the conventional denitration apparatus in which the ammonia injection nozzles are provided in the curved duct where the bias of flow is generated, it is required to ensure diffusion distances of the ammonia gas inside the duct. However, in the denitration apparatus for a coal fired boiler according to the present aspect, by providing the rectifying device and the ammonia injection nozzles in the catalytic reactor in an integrated manner, the duct which is conventionally extended can be shortened. Accordingly, the denitration apparatus can be downsized. In addition, when the denitration apparatus is added to the existing boiler, it is not required to change a layout of the existing duct each time of the addition, thereby allowing a designing period to be shortened and costs to be reduced.

In addition, the exhaust gas can be further rectified by flow channel resistance of the ammonia injection nozzles themselves. Therefore, since the exhaust gas in a further rectified state reaches the catalyst layer, denitration performance can be enhanced and ash accumulation to the catalyst layer can be prevented.

Furthermore, since when the ammonia injection nozzles are provided in the vicinity of the rectifying device, a supporting structure can be shared by the ammonia injection nozzles and the rectifying device, the number of components can be decreased, thereby allowing costs to be reduced. In conjunction therewith, since a distance up to the catalyst layer can be ensured, a diffusion distance of the ammonia gas can be ensured.

Moreover, since a flow channel cross-sectional area of the catalytic reactor (the inlet of the catalytic reactor) where the ammonia injection nozzles are installed is approximately three times as large as a flow channel cross-sectional area of the curved duct, and the catalytic reactor is a region where a flow velocity of the exhaust gas is one third of a flow velocity thereof in the curved duct, a pressure loss can be reduced and erosion of the ammonia injection nozzles can be reduced.

### [Advantageous Effects of Invention]

The denitration apparatus for a coal fired boiler according to the present invention makes velocity distribution of exhaust gas, where ammonia injection nozzles are installed, uniform and causes the exhaust gas whose flows have been rectified to pass therethrough, thereby allowing jetted ammonia gas to be uniformly diffused without elongating a duct.

In addition, when the denitration apparatus is added to the existing boiler, without changing a layout of the existing duct, the denitration apparatus can be added.

### [Brief Description of Drawings]

[Fig. 1] Fig. 1 is a longitudinal sectional view of a denitration apparatus for a coal fired boiler according to an embodiment of the present invention.
[Fig. 2] Fig. 2 is a longitudinal sectional view of a denitration apparatus for a coal fired boiler according to an example that is not according to the invention as claimed but serves to explain aspects of the present invention.
[Fig. 3] Fig. 3 is a longitudinal sectional view of a denitration apparatus for a coal fired boiler in a conventional prior art example.

### [Description of Embodiments]

Hereinafter, a denitration apparatus for a coal fired boiler according to embodiments of the present invention will be described with reference to the accompanying drawings.

### [Embodiment]

Exhaust gas from a coal fired boiler which passes through an inside of a denitration apparatus 1A for a coal fired boiler is mixed with ammonia gas and thereafter, is passed through a catalyst layer 46, whereby nitrogen oxides (NOx) in the exhaust gas are decomposed into nitrogen and water vapor which have no environmental load by chemical reaction. The exhaust gas from which the nitrogen oxides (NOx) are eliminated is discharged from a smoke exhaust duct (not shown) or the like to atmospheric air.

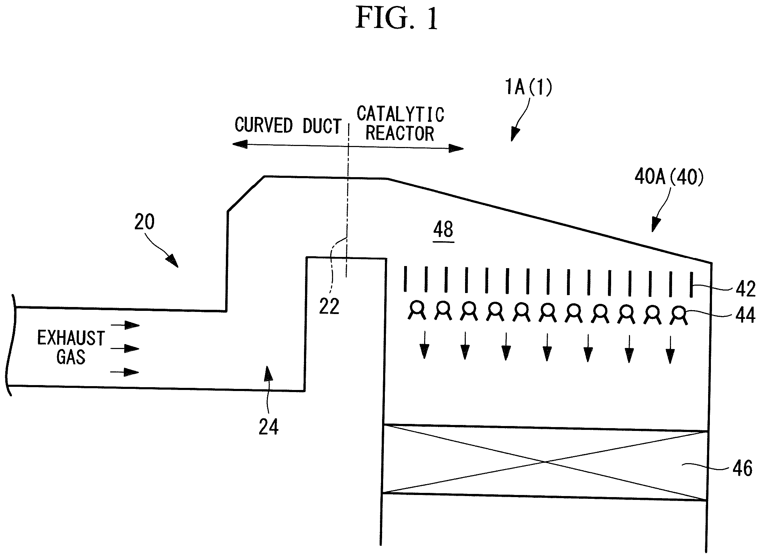

In Fig. 1, a longitudinal sectional view of the denitration apparatus 1A for a coal fired boiler according to an embodiment of the present invention is shown. The denitration apparatus 1A for a coal fired boiler is, for example, a denitration apparatus of SCR (Selective Catalytic Reduction). The denitration apparatus 1A for a coal fired boiler includes a curved duct 20 and a catalytic reactor 40A. A duct outlet 22 of the curved duct 20 is connected to the catalytic reactor 40A, whereby the curved duct 20 and the catalytic reactor 40A are integrated.

The curved duct 20 has a bend section 24 whose portion of a flow channel is bent. An opening (a duct inlet) of the curved duct 20, which is located on a side opposite to the duct outlet 22, is connected to a coal fired boiler (not shown). The exhaust gas discharged from the coal fired boiler, which contains the nitrogen oxides (NOx), flows in from the duct inlet and flows toward the duct outlet 22. When the exhaust gas passes through the bend section 24, bias of flow is generated in the flow of the exhaust gas due to bending of the flow channel.

The exhaust gas flowing in from the duct inlet, which has reached the duct outlet 22 whose flow channel direction is a horizontal direction, flows toward downstream of the catalytic reactor 40A.

While the exhaust gas which has flowed in the catalytic reactor 40A from the duct outlet 22 is first passing through a section (flow channel expanded part 48) whose flow channel of the catalytic reactor 40A is expanded, a flow direction thereof is changed from the horizontal direction to a vertical direction. In addition, because a flow channel area is expanded by approximately three times, a flow velocity of the exhaust gas is reduced to approximately one third.

The catalytic reactor 40A immediately behind downstream of the flow channel expanded part 48 has a section whose flow channel cross-sectional area is made substantially constant. In the catalytic reactor 40A having the section whose flow channel cross-sectional area is made substantially constant, a rectifying device 42, ammonia injection nozzles 44, and a catalyst layer 46 are provided in order from the upstream (an upper portion in Fig. 1). The rectifying device 42 and the ammonia injection nozzles 44 are installed on an inlet portion of the section (on an upstream portion in the section) whose flow channel cross-sectional area is made substantially constant, and the ammonia injection nozzles 44 are set immediately downstream of the rectifying device 42 in such a way as to be continuous with the rectifying device 42. The flow channel cross-sectional area is approximately three times as large a duct area. A superficial velocity in the duct is 9 m/s to 18 m/s and preferably, is 12 m/s to 15 m/s.

The rectifying device 42 has a multiple parallel flat plates whose each vertical direction is a short direction and each drawing plane vertical direction is a longitudinal direction. The multiple parallel flat plates are installed in such a way as to be spaced apart from each other at predetermined intervals in a horizontal direction. Flows of fluid (the exhaust gas) passing through the parallel flat plates become uniform due to flow channel resistance of the parallel flat plates. In other words, the flows thereof are rectified. Although the rectifying device is constituted of the parallel flat plates, the rectifying device is not limited to this and may be guide vanes or a lattice.

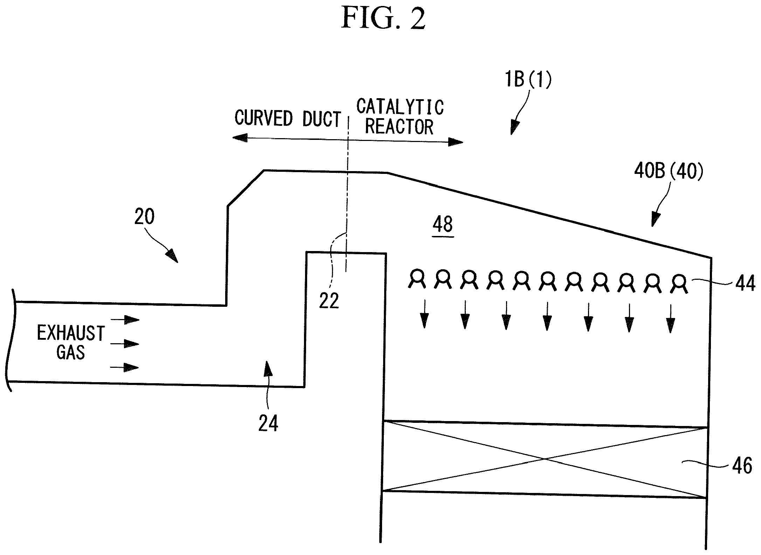

The ammonia injection nozzles 44 are each provided with a circular tube, and nozzles which extend downward from the circular tube. The circular tubes are installed in such a way as to be spaced apart from each other at the predetermined intervals in the horizontal direction, the drawing plane vertical direction is a longitudinal direction of each circular tube. The ammonia gas introduced into the circular tubes by a device, not shown, is jetted into the exhaust gas via the nozzles extending downward. While the ammonia gas is being mixed with the exhaust gas in the flow channel of the catalytic reactor 40A, the ammonia gas flows toward the catalyst layer 46 which is installed downstream of the ammonia injection nozzles 44. It is preferable that the rectifying device in the longitudinal direction and the circular tubes of the ammonia injection nozzles in the longitudinal direction are located to have equal distances, and although in Figs. 1 and 2, the rectifying device and the circular tubes thereof are disposed at parallel with each other, the rectifying device and the circular tubes thereof may be located to intersect with each other.

The catalyst layer 46 has, for example, ceramics or oxidized titanium carried thereon, and by passing the exhaust gas mixed with the ammonia gas therethrough, the nitrogen oxides (NOx) in the exhaust gas are decomposed into the nitrogen and the water vapor which have no environmental load by the chemical reaction. A superficial velocity at this time is 3 m/s to 6 m/s and preferably, is 4 m/s to 5 m/s.

According to the present embodiment, the below-described effects are exhibited.

The bias of flow of the exhaust gas generated in the curved duct 20 which is connected to the upstream of the catalytic reactor 40A are rectified by the rectifying device 42 which is installed upstream of the ammonia injection nozzles 44. In addition, the rectifying device 42 and the ammonia injection nozzles 44 are continuously installed, and between the rectifying device 42 and the ammonia injection nozzles 44, other components are not installed. Therefore, the exhaust gas passing through the ammonia injection nozzles 44 becomes rectified. Thus, variation in a concentration of the ammonia of the ammonia gas jetted from the ammonia injection nozzles 44 due to the bias of flow is suppressed and the ammonia gas can be stably diffused. In the conventional denitration apparatus in which the ammonia injection nozzles 44 are provided in the curved duct 20 where the bias of flow is generated, it is required to ensure diffusion distances of the ammonia gas inside the duct. However, in the denitration apparatus 1A for a coal fired boiler according to the present embodiment, by providing the rectifying device 42 and the ammonia injection nozzles 44 in the catalytic reactor 40A in an integrated manner, the duct which is conventionally extended can be shortened. Accordingly, the denitration apparatus can be downsized. In addition, when the denitration apparatus is added to the existing boiler, it is not required to change a layout of the existing duct each time of the addition, thereby allowing a designing period to be shortened and costs to be reduced.

In addition, the exhaust gas can be further rectified by the flow channel resistance of the ammonia injection nozzles 44 themselves. Therefore, since the exhaust gas in a further rectified state reaches the catalyst layer 46, denitration performance can be enhanced and ash accumulation to the catalyst layer 46 can be prevented.

Furthermore, since when the ammonia injection nozzles 44 are provided in the vicinity of the rectifying device 42, a supporting structure can be shared by the ammonia injection nozzles 44 and the rectifying device 42, the number of components can be decreased, thereby allowing costs to be reduced. In conjunction therewith, since a distance up to the catalyst layer 46 can be ensured, a diffusion distance of the ammonia gas can be ensured.

Moreover, since a flow channel cross-sectional area of the catalytic reactor 40A (an inlet of the catalytic reactor 40A) where the ammonia injection nozzles 44 are installed is larger than a flow channel cross-sectional area of the curved duct 20, and the catalytic reactor 40A is a region where a flow velocity of the exhaust gas is low, a pressure loss can be reduced and erosion of the ammonia injection nozzles 44 can be reduced.

### [Example]

Next, a denitration apparatus for a coal fired boiler according to an example that is not according to the invention as claimed but serves to explain aspects of the present invention will be described. The present example is different from the embodiment in that a rectifying device 42 is not provided, and the other configuration of the present example is similar to the configuration of the embodiment. Accordingly, only the difference from the embodiment will be described, and the same reference signs as those in the embodiment are used and the description therefor will be omitted.

In Fig. 2, a longitudinal sectional view of the denitration apparatus 1B for a coal fired boiler according to the example is shown. The denitration apparatus 1B for a coal fired boiler according to the present example has a configuration similar to a configuration in which the rectifying device 42 is omitted from the denitration apparatus 1A for a coal fired boiler in the embodiment of the invention. In other words, on an inlet portion of the section (on an upstream portion in the section) of the catalytic reactor 40B, whose flow channel cross-sectional area is made substantially constant, as a member for rectifying flows of the exhaust gas, only ammonia injection nozzles 44 are installed.

According to the present example, the below-described effects are exhibited.

Bias of flow of the exhaust gas generated in the curved duct 20 which is connected to the upstream of the catalytic reactor 40B are rectified by flow channel resistance of the ammonia injection nozzles 44 themselves. Thus, variation in a concentration of the ammonia of the ammonia gas jetted from the ammonia injection nozzles 44 due to the bias of flow is suppressed and the ammonia gas can be stably diffused, and moreover, the exhaust gas in a rectified state reaches a catalyst layer 46. In the conventional denitration apparatus in which the ammonia injection nozzles 44 are provided in the curved duct where the bias of flow is generated, it is required to ensure diffusion distances of the ammonia gas inside the duct. However, in the denitration apparatus 1B for a coal fired boiler according to the present example, by providing the ammonia injection nozzles 44 in the catalytic reactor 40B, the duct which is conventionally extended can be shortened. Accordingly, the denitration apparatus can be downsized. In addition, when the denitration apparatus is added to the existing boiler, it is not required to change a layout of the existing duct each time of the addition, thereby allowing a designing period to be shortened and costs to be reduced.

In addition, since a flow channel cross-sectional area of the catalytic reactor 40B (an inlet of the catalytic reactor 40B) where the ammonia injection nozzles 44 are installed is larger than a flow channel cross-sectional area of the curved duct 20, and the catalytic reactor 40B is a region where a flow velocity of the exhaust gas is low, a pressure loss can be reduced and erosion of the ammonia injection nozzles 44 can be reduced.

Furthermore, since the rectifying device 42 is not provided in the catalytic reactor 40B, a structure can be simplified and manufacturing costs can be reduced.

### [Reference Signs List]

- 1 (1A, 1B): Denitration apparatus for a coal fired boiler
- 20: Curved duct
- 22: Duct outlet
- 24: Bend section
- 40 (40A, 40B): Catalytic reactor
- 42: Rectifying device
- 44: Ammonia injection nozzles
- 46: Catalyst layer
- 48: Flow channel expanded part

## Claims

1. A denitration apparatus (1A) for a coal fired boiler, the denitration apparatus (1A) comprising:
a curved duct (20) having a duct inlet, a duct outlet (22), and a bend section (24) whose portion of a flow channel through which exhaust gas that flows in from the duct inlet and flows toward the duct outlet (22) passes, is curved, a flow channel direction of the duct outlet (22) being a horizontal direction; and
a catalytic reactor (40A) connected to the duct outlet (22) of the curved duct (20), whereby the curved duct (20) and the catalytic reactor (40A) are integrated,
wherein the catalytic reactor (40A) has a flow channel expanded part (48) whose flow channel of the catalytic reactor (40A) is expanded such that a flow direction of exhaust gas that flows in from the duct outlet (22) and passes through the flow channel expanded part (48) is changed from the horizontal direction to a vertical direction,
wherein the catalytic reactor (40A) immediately downstream of the flow channel expanded part (48) has a section whose flow channel cross-sectional area is substantially constant, whose flow channel cross-sectional area is approximately three times as large as a flow channel cross-sectional area of the curved duct (20), and which is provided with a rectifying device (42) with multiple parallel flat plates, ammonia injection nozzles (44) for jetting ammonia gas, and a catalyst layer (46),
wherein the rectifying device (42) and the ammonia injection nozzles (44) are disposed at an inlet portion of the section of the catalytic reactor (40A) whose flow channel cross-sectional area is substantially constant and are located upstream of the catalyst layer (46),
wherein the ammonia injection nozzles (44) are set immediately downstream of the rectifying device (42) in such a way as to be continuous with the rectifying device (42),
wherein the ammonia injection nozzles (44) are each provided with a tube, and with nozzles which extend downward from the tube, the tube being circular in a cross section perpendicular to a longitudinal direction of the tube, the tubes being further installed in such a way as to be spaced apart from each other at predetermined intervals in the horizontal direction and as to have their longitudinal direction perpendicular to the horizontal direction and to the vertical direction, wherein ammonia gas introduced into the tubes is jetted into the exhaust gas via the nozzles extending downward,
wherein the parallel flat plates are installed in such a way as to be spaced apart from each other at predetermined intervals in the horizontal direction, such that the flows of the exhaust gas passing through the parallel flat plates become uniform due to a flow channel resistance of the parallel flat plates, and
wherein each of the flat plates of the rectifying device (42) is oriented such that a side oriented in the vertical direction is a short side and a longitudinal direction is perpendicular to the horizontal direction and to the vertical direction.

## Patentansprüche

1. Eine Denitrifikationsvorrichtung (1A) für einen kohlebefeuerten Kessel, wobei die Denitrifikationsvorrichtung (1A) umfasst:
einen abgewinkelten Kanal (20) mit einem Kanaleinlass, einem Kanalauslass (22) und einem abgebogenen Abschnitt (24), dessen Teil eines Strömungskanals, durch den Abgas, das von dem Kanaleinlass einströmt und zu dem Kanalauslass (22) strömt, abgewinkelt ist, wobei eine Strömungskanalrichtung des Kanalauslasses (22) eine horizontale Richtung ist, und
einen katalytischen Reaktor (40A), der mit dem Kanalauslass (22) des abgewinkelten Kanals (20) verbunden ist, wobei der abgewinkelte Kanal (20) und der katalytische Reaktor (40A) integriert sind,
wobei der katalytische Reaktor (40A) einen Strömungskanal-Aufweitungsteil (48) aufweist, dessen Strömungskanal des katalytischen Reaktors (40A) derart aufgeweitet ist, dass eine Strömungsrichtung von Abgas, das von dem Kanalauslass (22) einströmt und den Strömungskanal-Aufweitungsteil (48) durchläuft, von der horizontalen Richtung in eine vertikale Richtung geändert wird,
wobei der katalytische Reaktor (40A) unmittelbar stromabwärts des Strömungskanal-Aufweitungsteils (48) einen Abschnitt aufweist, dessen Strömungskanal-Querschnittsfläche im Wesentlichen konstant ist, dessen Strömungskanal-Querschnittsfläche etwa dreimal so groß ist wie eine Strömungskanal-Querschnittsfläche des abgewinkelten Kanals (20), und der mit einer Rektifizierungsvorrichtung (42) mit mehreren parallelen flachen Platten, Ammoniak-Einspritzdüsen (44) zum Einspritzen von Ammoniakgas und einer Katalysatorschicht (46) versehen ist,
wobei die Rektifizierungsvorrichtung (42) und die Ammoniak-Einspritzdüsen (44) an einem Einlassabschnitt des Abschnitts des katalytischen Reaktors (40A) angeordnet sind, dessen Strömungskanal-Querschnittsfläche im Wesentlichen konstant ist, und sich stromaufwärts der Katalysatorschicht (46) befinden,
wobei die Ammoniak-Einspritzdüsen (44) unmittelbar stromabwärts der Rektifizierungseinrichtung (42) so angeordnet sind, dass sie mit der Rektifizierungseinrichtung (42) kontinuierlich sind,
wobei die Ammoniak-Einspritzdüsen (44) jeweils mit einem Rohr und mit Düsen versehen sind, die sich von dem Rohr nach unten erstrecken, wobei das Rohr in einem Querschnitt senkrecht zu einer Längsrichtung des Rohrs kreisförmig ist, wobei die Rohre ferner so installiert sind, dass sie in der horizontalen Richtung in vorbestimmten Abständen voneinander beabstandet sind und ihre Längsrichtung senkrecht zu der horizontalen Richtung und zu der vertikalen Richtung verläuft, wobei in die Rohre eingeführtes Ammoniakgas über die sich nach unten erstreckenden Düsen in das Abgas gestrahlt wird,
wobei die parallelen flachen Platten so angebracht sind, dass sie in der horizontalen Richtung in vorbestimmten Abständen voneinander beabstandet sind, so dass die Strömungen des Abgases, das durch die parallelen flachen Platten strömt, aufgrund eines Strömungskanalwiderstands der parallelen flachen Platten gleichmäßig werden, und
wobei jede der flachen Platten der Rektifizierungsvorrichtung (42) so ausgerichtet ist, dass eine in der vertikalen Richtung ausgerichtete Seite eine kurze Seite ist und eine Längsrichtung senkrecht zu der horizontalen Richtung und zu der vertikalen Richtung ist.

## Revendications

1. Installation (1A) de dénitration pour une chaudière à charbon, l'installation (1A) de dénitration comprenant :
une gaine (20) courbée ayant une entrée de gaine, une sortie (22) de gaine et un tronçon (24) coudé, dont la partie d'un conduit du courant, par lequel passe du gaz d'échappement qui entre par l'entrée de la gaine et va vers la sortie (22) de la gaine, est courbée, un direction du conduit du courant de la sortie (22) de la gaine étant une direction horizontale ; et
un réacteur (40A) catalytique communiquant avec la sortie (22) de la gaine (20) courbée, la gaine (20) courbée et le réacteur (40A) catalytique étant intégrés,
dans laquelle le réacteur (40A) catalytique a une partie (48) agrandie de conduit du courant, le conduit du courant du réacteur (40A) catalytique étant agrandi de manière à ce qu'une direction du courant des gaz d'échappement, qui entrent par la sortie (22) de la gaine et qui passent par la partie (48) agrandie de conduit du courant, passe de la direction horizontale à une direction verticale,
dans laquelle le réacteur (40A) catalytique a, immédiatement en aval de la partie (48) agrandie de conduit du courant, un tronçon, dont la surface de section transversale du conduit du courant est sensiblement constante, la surface de section transversale du conduit du courant étant à peu près trois fois aussi grande que la surface de section transversale de conduit du courant de la gaine (20) courbée, et qui est pourvu d'un dispositif (42) de rectification ayant de multiples plaques planes parallèles, des buses (44) d'injection d'ammoniac pour projeter de l'ammoniac gazeux et une couche (46) de catalyseur,
dans laquelle le dispositif (42) de rectification et les buses (44) d'injection d'ammoniac sont disposés à une partie d'entrée du tronçon du réacteur (40A) catalytique, dont la surface de section transversale du conduit du courant est sensiblement constante, et sont disposés en amont de la couche (46) catalytique,
dans laquelle les buses (44) d'injection d'ammoniac sont mises immédiatement en aval du dispositif (42) de rectification, de manière à être continues avec le dispositif (42) de rectification,
dans laquelle les buses (44) d'injection d'ammoniac sont pourvues chacune d'un tube et de buses, qui s'étendent vers le bas à partir du tube, le tube étant circulaire en section transversale perpendiculairement à une direction longitudinale du tube, les tubes étant en outre montés d'une façon telle qu'ils soient à distance les uns des autres à des intervalles déterminés à l'avance dans la direction horizontale et qu'ils aient leur direction longitudinale perpendiculaire à la direction horizontale et à la direction verticale, de l'ammoniac gazeux introduit dans les tubes étant projeté dans les gaz d'échappement par les buses s'étendant vers le bas,
dans laquelle les plaques planes parallèles sont montées de telle façon qu'elles sont à distance les unes des autres à des intervalles déterminés à l'avance dans la direction horizontale, de manière à ce que les courants de gaz d'échappement passant dans les plaques parallèles deviennent uniformes en raison d'une résistance de canal du courant des plaques planes parallèles, et
dans laquelle chacune des plaques planes du dispositif (42) de rectification est orienté de manière à ce qu'un côté, orienté dans la direction verticale, soit un petit côté et qu'une direction longitudinale soit perpendiculaire à la direction horizontale et à la direction verticale.
